# EUROPÄISCHE PATENTSCHRIFT

(11) **EP 1 963 148 B1**
(45) Veröffentlichungstag und Bekanntmachung des Hinweises auf die Patenterteilung: **30.09.2015**
(21) Anmeldenummer: 06819569.2
(22) Anmeldetag: 17.11.2006
(51) Int. Cl.: B60S 1/40

(54) **ANSCHLUSSVORRICHTUNG FÜR EINEN WISCHARM**
CONNECTION APPARATUS FOR A WIPING ARM
DISPOSITIF DE RACCORDEMENT POUR UN BRAS D'ESSUIE-GLACE

(30) Priorität: 15.12.2005 DE 102005060491; 12.05.2006 DE 102006022389
(43) Veröffentlichungstag der Anmeldung: 03.09.2008
(73) Patentinhaber: ROBERT BOSCH GMBH, 70442 Stuttgart (DE)
(72) Erfinder: DE BLOCK, Peter, B-3545 Halen (BE); WINDMOLDERS, Eric, B-3510 Kermt (BE); VANGEEL, Tom, B-3000 Leuven (BE); BEELEN, Hans, B-3540 Herk De Stad (BE)
(86) Internationale Anmeldenummer: PCT/EP2006/068594
(87) Internationale Veröffentlichungsnummer: WO 2007/071508

(56) Entgegenhaltungen:
- EP-A2- 1 029 758
- WO-A-2005/002934
- DE-A1- 10 000 374

## Beschreibung

### Stand der Technik

Die Erfindung betrifft eine Anschlussvorrichtung für einen Wischarm und ein Wischblatt gemäß dem Oberbegriff des Anspruchs 1 sowie ein System aus zwei Flachbalkenwischblättern gemäß dem Oberbegriff des Anspruchs 7.

Aus der DE-A-102 30 457 ist bereits eine Anschlussvorrichtung für einen Wischerarm und ein Wischblatt bekannt, die ein wischblattseitiges erstes Anschlussteil und ein wischarmseitiges zweites Anschlussteil aufweisen, die in Betriebstellung nebeneinander angeordnet sind. Das zweite Anschlussteil weist ein Gelenkelement auf, so dass das Wischblatt um eine Gelenkachse schwenkbar mit dem Wischerarm verbunden ist, wobei ein Sicherungsmittel vorgesehen ist, so dass die beiden Anschlussteile ineinander greifen.

Weiterhin sind zahlreiche Anschlussvorrichtungen für Wischerarme mit Wischblättern bekannt, bei denen das wischarmseitige Anschlussteil über dem wischblattseitigen Anschlussteil angeordnet ist.

Aus DE 10000374 A1 ist eine Wischblattanordnung bekannt, die eine Verbindung zwischen einem Wischblatt und einem Wischarm eines Scheibenwischers aufweist, wobei das Wischblatt einen flachen Adapter und einen an einem Lagerstück am Wischarm befestigten Verbindungszapfen aufweist. Der Verbindungszapfen steht von dem Lagerstück radial weg und greift in eine Lagerbohrung des Adapters ein. Weiterhin weist der Adapter eine Ausnehmung auf, in die eine Rastnase des Lagerstückes hineinreicht, so dass der Adapter mit diesem auch das Wischblatt gegen Herunterrutschen von dem Verbindungszapfen axial sichert.

Aus WO 2005/002934 A1 ist eine Verbindung zwischen einem Wischblatt und einem Wischblatt bekannt, wobei die Verbindung einen am Wischarm befestigten, über eine Längsseite des Wischarms wegstehenden Lager- oder Verbindungszapfen, auf dem das Wischblatt schwing- oder schwenkbar gelagert ist, sowie ein Verriegelungselement am Wischarm aufweist, das in einem das Wischblatt am Wischarm sichernden oder verriegelnden Zustand des Wischblatts oder einem Wischblattadapter an einer dem Wischarm abgewandten Fläche hintergreift. Das Verriegelungselement ist um eine Achse parallel zur Achse des Verbindungszapfens schwenkbar am Wischarm vorgesehen, und zwar zwischen der die Verbindung verriegelnden Stellung und einer die Verbindung nicht verriegelnden Stellung.

Aus EP 1029758 B1 ist eine Wischanlage für ein Kraftfahrzeug bekannt, wobei zwei Scheibenwischer mit je einem Wischarm und einem Wischblatt vorgesehen sind. Der Wischarm und das Wischblatt sind jeweils über Anschlussteile mit einem Gelenkelement miteinander verbunden.

Es ist bekannt, für die Fahrerseite und die Beifahrerseite unterschiedlich ausgebildete, meist unterschiedlich lange Wischblätter vorzusehen. Es besteht das Problem, dass die Wischblätter häufig verwechselt werden, was zu einem ungenügenden Wischbild und teilweise sogar zu einer Beschädigung des Kraftfahrzeugs führen kann.

### Offenbarung der Erfindung

### Technische Aufgabe

Der Erfindung liegt die Aufgabe zugrunde ein Anschlussvorrichtung für einen Wischerarm und ein Wischblatt sowie ein System mit zwei Flachbalkenwischern vorzuschlagen mit denen die Gefahr einer Verwechslung unterschiedlicher Wischblätter zumindest minimiert wird.

### Technische Lösung

Diese Aufgabe wird mit einer Anschlussvorrichtung mit den Merkmalen des Anspruchs 1 sowie mit einem System mit den Merkmalen des Anspruchs 7 gelöst.

Vorteilhafte Weiterbildungen der Erfindung sind in den Unteransprüchen angegeben.

Der Erfindung liegt der Gedanke zugrunde, an der Anschlussvorrichtung für einen Wischerarm und ein Wischblatt Identmittel vorzusehen, durch die eine eindeutige Zuordnung der Wischblätter zu dem zugehörigen Wischerarm, an der Beifahrerseite bzw. der Fahrerseite möglich ist. Die Anschlussvorrichtungen sind derart ausgebildet, dass aufgrund der Identmittel zumindest die Montage eines Wischblatts am nicht zugehörigen Wischerarm verhindert wird. Die Ausformung und/oder Anordnung und/oder Anzahl der Identmittel verhindert eine falsche Zuordnung beider Wischblätter. So ist beispielsweise eine Montage des fahrerseitigen Wischblatts an dem beifahrerseitigen Wischerarm nicht möglich.

Gemäß der erfindungsgemäßen Ausführungsform sind die Identmittel eines Identmittelpaares formkomplementär ausgebildet und/oder derart angeordnet, dass sie im Betriebszustand ineinander greifen. Die Identmittel der verschiedenen Paare sind jedoch nicht formkomplementär zueinander ausgebildet und/oder derart angeordnet, dass die im Betriebszustand nicht ineinander greifen können.

Bevorzugt weist das Sicherungsmittel des zweiten Anschlussteils eine Brücke mit Begrenzung auf. Mittels der Brücke übergreift das Sicherungsmittel das erste Anschlussteil zumindest teilweise. Die Begrenzung dient zum Hintergreifen des ersten Anschlussteils bzw. eine Vorsprungs des ersten Anschlussteils, um eine Axialverschiebung entlang der Gelenkachse im montierten Zustand zu vermeiden. Bevorzugt greift die Begrenzung in eine Tasche des ersten Anschlussteils ein. In Betriebsstellung verriegelt diese somit die Anschlussvorrichtung.

Eine einfache Handhabung wird in kostengünstiger Weise dadurch erzielt, dass das erste Anschlussteil vom zweiten Anschlussteil durch eine Drehung zumindest eines der Anschlussteile um die Gelenkachse um einen Lösewinkel lösbar und/oder verbindbar ist. Auf diese Weise ist es möglich, ohne Zuhilfenahme von Werkzeugen oder ohne besondere Kenntnisse das Wischblatt vom Wischerarm zu trennen bzw. diese zu verbinden, wodurch die Montage insbesondere auch für den Laien vereinfacht wird. Es ist vorteilhaft, wenn die Begrenzung einen Ansatz zur Festlegung des Lösewinkels aufweist. Darüber hinaus ist es vorteilhaft, wenn der Lösewinkel zwischen 5° und 50°, insbesondere zwischen 20° und 40°, vorzugsweise zwischen 20° und 30°, idealerweise etwa 25° beträgt, da auf diese Weise ein sicherer Halt der Anschlussvorrichtung gewährleistet ist ohne die Handhabung beim Wechsel des Wischblattes zu beeinträchtigen. Hierbei ist es von besonderem Vorteil, wenn eine Anschlagbegrenzung vorgesehen ist, die insbesondere durch eine Kante oder Fläche der Aufnahme gebildet ist, die eine Drehung über den Lösewinkel hinaus verhindert. Idealerweise ist die longitudinale Ausformung der Aufnahme derart dimensioniert, dass sie beim Lösen und/oder Verbinden der Anschlussteile den Ansatz aufzunehmen vermag. In einer einfachen Ausführung ist vorteilhafterweise die Aufnahme rillenförmig ausgebildet und umfasst insbesondere zwei Seitenwände und einen Boden, der insbesondere im Wesentlichen eben ausgebildet ist. Hierdurch eignet sich das erste Anschlussteil im Besonderen zur Herstellung im Spritzgussverfahren. In Weiterbildung der Erfindung ist vorgesehen, dass das erste Anschlussteil eine Spoilerwand aufweist, die die Gesamthöhe des ersten Anschlussteils bildet und eine Spoilerseite abschließt. Auf diese Weise wird ein besonders strömungsgünstiges Äußeres erzielt und darüber hinaus eine besonders gefällige Optik erreicht. Besonders einfach, kostengünstig und gefällig schließt das Sicherungsmittel das erste Anschlussteil im Wesentlichen bündig ab.

In Ausgestaltung der Erfindung ist vorgesehen, dass zumindest eines der beiden Identmittel einer Anschlussvorrichtung, vorzugsweise das erste Identmittel, als Öffnung und das andere Identmittel, vorzugsweise das zweite Identmittel, als Zapfen ausgebildet ist, die in Betriebsstellung ineinander greifen. Dabei ist die Öffnung und/oder der Zapfen bei zwei unterschiedlichen Anschlussvorrichtungen unterschiedlich ausgeformt oder angeordnet, so dass nur die zueinander passenden Teile aneinander montierbar sind. Darüber hinaus ist es denkbar, die Anzahl der Identmittel bei unterschiedlichen Anschlussvorrichtungen unterschiedlich zu wählen. Beispielsweise können als erste Identmittel des fahrerseitigen Wischblattes drei Zapfen vorgesehen werden, die mit drei Öffnungen des fahrerseitigen Wischerarms in Anordnung und Ausformung korrespondieren. Wenn nun am beifahrerseitigen Wischerarm nur zwei Öffnungen vorgesehen sind oder drei Öffnungen an unterschiedlicher Relativposition zueinander, so kann das fahrerseitige Wischblatt nicht am beifahrerseitigen Wischerarm bzw. dessen zugehörigem ersten Anschlussteil montiert werden.

Weiterhin ist es denkbar, die Begrenzung des Sicherungsmittels sowie eine zugehörige Tasche zur Aufnahme der Begrenzung als Identmittel vorzusehen. Dabei können die Begrenzungen und/oder Taschen zweier unterschiedlicher Anschlussvorrichtungen unterschiedlich ausgeformt und/oder angeordnet werden, um eine Verwechslung der Wischblätter auszuschließen. Beispielsweise können die Begrenzungen zweiter unterschiedlicher Anschlussvorrichtungen unterschiedlich lang und/oder breit und die zugehörigen Taschen entsprechend unterschiedlich tief und/oder unterschiedlich breit ausgeführt werden. Die unterschiedliche Anordnung der Begrenzungen zweier unterschiedlicher Anschlussvorrichtungen kann beispielsweise durch eine unterschiedliche Brückenlänge realisiert werden.

Gemäß der Erfindung umfasst das System aus zwei Flachbalkenwischblättern an mindestens einem Flachbalkenwischblatt ein erstes Identmittel zum Unterscheiden der beiden Wischblätter.

Weiterhin ist es möglich, das erste Identmittel als Zapfen oder Öffnung auszubilden, die mit den entsprechenden zweiten Identmitteln an dem zugehörigen Wischerarm korrespondieren. Die Zapfen und/oder Öffnungen können sich durch Anzahl, Ausformung oder Positionierung unterscheiden.

Zusätzlich oder alternativ können die Taschen zur Aufnahme der jeweiligen Begrenzung des Sicherungsmittels des zweiten Anschlussteils als Identmittel ausgebildet sein. Diese können sich durch Größe, Anzahl oder Positionierung bei den beiden Flachbalkenwischblättern unterscheiden. Daneben ist es denkbar, als Identmittel die Gestaltung der Oberseite des zweiten Anschlussteils zu nutzen, beispielsweise derart, dass nur das passende Wischblatt in Richtung seiner Gelenkachse auf das zweite Anschlussteil, insbesondere durch eine Vertiefung hindurch, aufschiebbar ist und dass das nicht passende Wischblatt beim Versuch des Ineinanderschiebens der Gelenkteile an der Seite des zweiten Anschlussteils anschlägt.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: ein montierte Anschlussvorrichtung in einer perspektivischen Darstellung,
- Fig. 2: das freie Ende eines Wischerarms mit dem wischarmseitigen zweiten Anschlussteil der Anschlussvorrichtung in einer perspektivischen Darstellung,
- Fig. 3: das wischblattseitige, an einem Flachbalkenwischblatt montierte erste Anschlussteil der Anschlussvorrichtung in perspektivischer Darstellung,
- Fig. 4: eine Anschlussvorrichtung, bei der die ersten Identmittel als Öffnung und die korrespondierenden zweiten Identmittel als Zapfen ausgebildet sind,
- Fig. 5: eine Variante der Anschlussvorrichtung gemäß Fig. 4,
- Fig. 6: eine Variante der Anschlussvorrichtung bei der die ersten Identmittel als Zapfen und die zweiten Identmittel als Öffnung ausgebildet sind,
- Fig. 7: eine Variante der Anschlussvorrichtung gemäß Fig. 6 während der Montage,
- Fig. 8: die in Fig. 7 dargestellte Anschlussvorrichtung im montierten Zustand,
- Fig. 9: ein Ausführungsbeispiel, bei dem die Oberseite des ersten Anschlussteils das erste Identmittel bildet,
- Fig. 10: eine Variante der Anschlussvorrichtung gemäß Fig. 9, mit einem in die Oberseite des zweiten Anschlussteils eingebrachten Vertiefung,
- Fig. 11: die Anschlussvorrichtung gemäß Fig. 10 mit korrespondierendem ersten Identmittel,
- Fig. 12: eine Anschlussvorrichtung in perspektivischer Ausgestaltung mit als Begrenzung und Tasche ausgebildeten Identmitteln,
- Fig. 13: das zweite Anschlussteil einer Anschlussvorrichtung mit im Boden angebrachten Identlogo.

### Ausführungsformen der Erfindung

In den Figuren sind gleiche Bauteile und Bauteile mit gleicher Funktion mit den gleichen Bezugszeichen versehen.

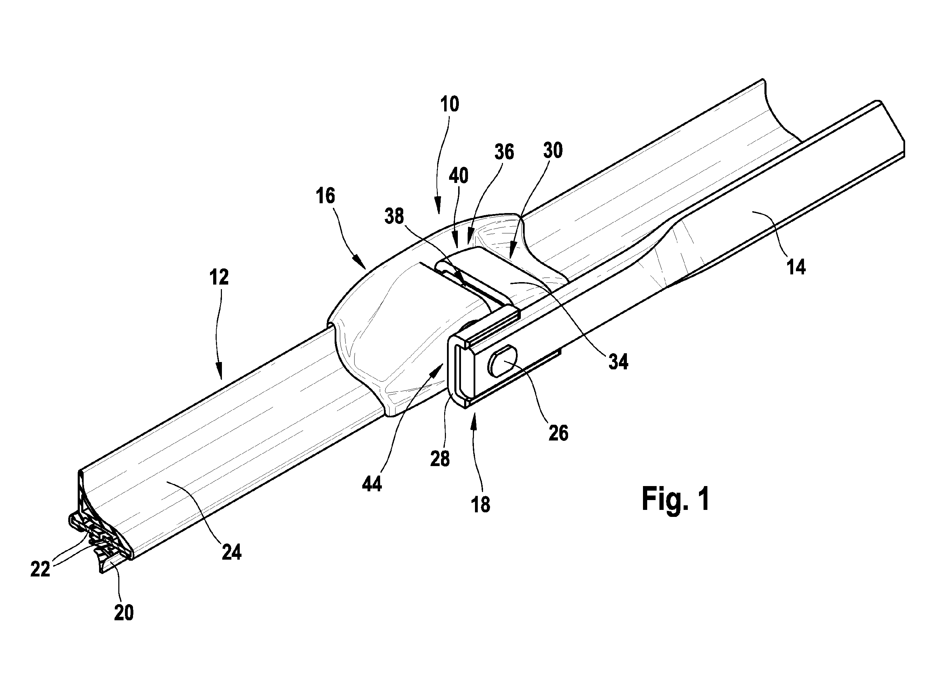

In Fig. 1 ist eine Anschlussvorrichtung 10 mit einem Abschnitt eines als Flachbalkenwischblatt ausgebildeten Wischblattes 12 und eines Wischerarms 14 gezeigt. Die Anschlussvorrichtung 10 zeigt im Wesentlichen ein erstes Anschlussteil 16, das am Wischblatt 12 befestigt ist sowie eine zweites Anschlussteil 18, welches am Wischerarm befestigt ist. Das als Flachbalkenwischblatt ausgebildete Wischblatt 12 umfasst im Wesentlichen einen Wischgummi 20, der auf einer Federschiene 22 gehaltert ist. Zur Verbesserung der Strömungseigenschaften ist auf der dem Wischgummi 20 abgewandten Seite der Federschiene 22 ein Spoiler 24 befestigt, insbesondere auf die Federschiene 22 aufgeschoben, der aus einem gummielastischen Material ausgebildet ist. Das erste Anschlussteil 16 ist fest mit der Federschiene 22 verbunden, so dass das Wischblatt 12 am ersten Anschluss 16 sicher gehalten ist.

Der Wischerarm 14 trägt an seinem freien Ende das zweite Anschlussteil 18. Der Wischerarm 14 ist hierbei im Bereich seines freien Endes als einfache Stange ausgebildet, die einen im Wesentlichen rechteckigen Querschnitt aufweist. Die im Querschnitt längere Seite der Stange verläuft senkrecht zur Scheibe. Das zweite Anschlussteil 18 ist in diesem Ausführungsbeispiel als Blechbiegeteil ausgebildet und umgreift das freie Ende des Wischerarms mit einem ersten Abschnitt 28 klammerartig. Ein zweiter Abschnitt 30 des zweiten Anschlussteils 18 erstreckt sich senkrecht vom freien Ende des Wischerarms 14 in Richtung des ersten Anschlussteils 16 und übergreift dieses brückenartig. Dadurch ist ein Sicherungsmittel 32 gebildet, das durch eine Brücke 34 des zweiten Abschnitts 30 gebildet ist, die von einer Begrenzung 36 abgeschlossen wird. Die Brücke 34 verläuft etwa senkrecht zur Längserstreckung des Wischerarms 14, parallel zur Oberfläche der Scheibe oder etwa parallel zu der Ebene, die durch die Federschiene 22 gebildet ist.

Das erste Anschlussteil 16 weist zur Aufnahme der Brücke 34 eine Aufnahme 38 und eine Tasche 40 auf, wobei im verbundenen Zustand die Brücke 34 in die Aufnehmung 38 und die Begrenzung in die Tasche 40 aufgenommen ist. Die Begrenzung 36 ist in etwa senkrecht zur Scheibe sowie senkrecht zur Brücke 34 angeordnet. Mittels der Begrenzung 36 greifen erstes Anschlussteil 16 und zweites Anschlussteil 18 ineinander.

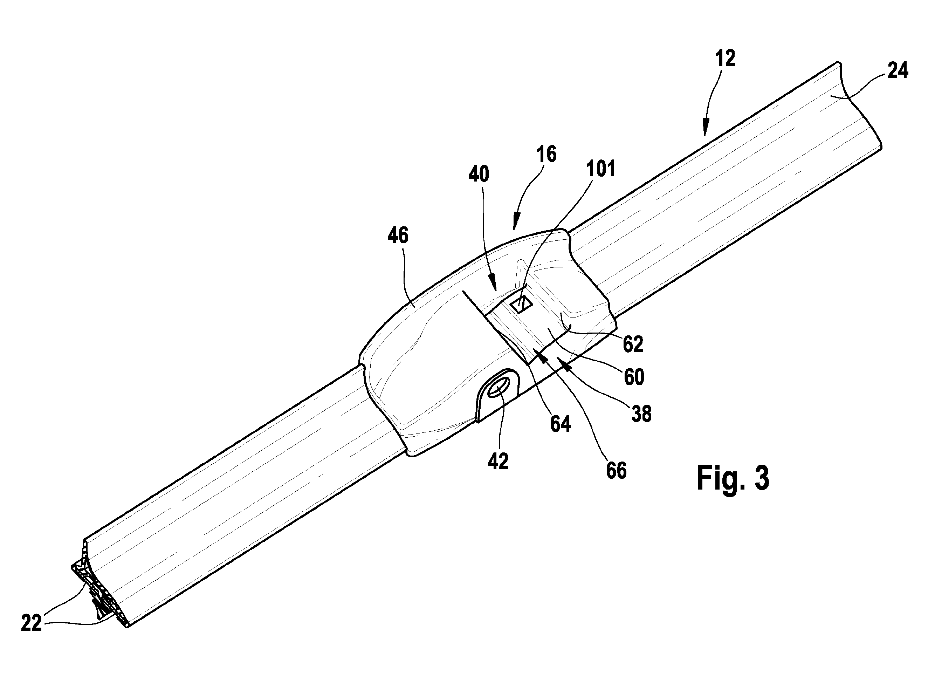

Weiterhin ist am zweiten Anschlussteil 18 ein Bolzen 26 vorgesehen, der sich in Richtung des Wischerarms 14, beabstandet von der Brücke 34 erstreckt. Die Längserstreckung des Bolzens 26 verläuft senkrecht zur Längserstreckung des Wischerarms 14 und damit etwa parallel zur Brücke 34. Der Bolzen 26 greift in ein Gegengelenkelement 43, das als Sackloch ausgebildet ist (siehe Fig. 3), ein, wodurch ein Gelenk 44 gebildet ist. Das erste Anschlussteil 16 ist damit mit dem zweiten Anschlussteil 18 drehbeweglich verbunden.

Der Bolzen 26 ist hierbei derart ausgebildet, dass er einerseits das zweite Anschlussteil 18 am freien Ende des Wischerarms 14 befestigt und gleichzeitig Teil des Gelenks 44 ist.

In der Aufnahme 38 sowie an der Brücke 34 sind nicht gezeigte erste und zweite Identmittel vorgesehen, die in der gezeigten Betriebsstellung ineinander greifen. Diese ermöglichen eine korrekte Zuordnung des Wischblattes 12 zu dem zugehörigen Wischerarm 14. Ein nicht zu dem Wischerarm 14 gehöriges Wischblatt 12 ist nicht montierbar, weil die ersten und zweiten Identmittel nicht miteinander korrespondieren, sei es aufgrund einer unterschiedlichen Anzahl und/oder einer unterschiedlichen Ausformung und/oder einer unterschiedlichen Positionierung.

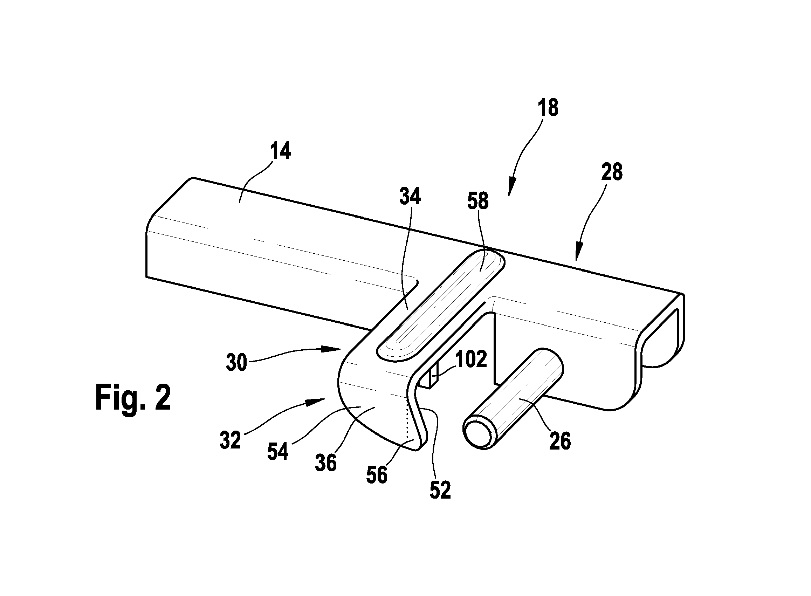

In Fig. 2 ist das zweite Anschlussteil 18 in einer Variation gezeigt, die jedoch funktional identisch aufgebaut ist, wie das in den übrigen Figuren gezeigte zweite Anschlussteil 18. Daher wurden die gleichen Elemente auch mit den gleichen Bezugsziffern versehen. Am ersten Abschnitt 28 des zweiten Anschlussteils 18 ist der Bolzen 26, der die Gelenkachse bildet, befestigt. Hiervon beabstandet ist das von Brücke 34 und rechtwinklig dazu angeordneter Begrenzung 36 gebildete Sicherungsmittel 32 angeordnet. Die parallelen und beabstandet voneinander angeordneten Seitenflächen 52 und 54 der Begrenzung 36begrenzen die axiale Beweglichkeit auf der Gelenkachse, indem sie Anschläge in axialer Richtung in der Tasche 40 des ersten Anschlussteils 16 bilden.

Zur Stabilisierung weist die Begrenzung 36 einen Ansatz 56 auf, der die Begrenzung 36 in Richtung des Bolzens 26 und damit in Richtung der Gelenkachse vergrößert. Die Ausbildung und Größe des Ansatzes 56 bestimmt den Lösewinkel. Zur Stabilisierung ist auf der Brücke 34 eine Erhöhung 58 ausgebildet, die die Biegesteifigkeit der Brücke 34 erhöht. Anstelle der Erhöhung 58, die direkt aus dem Blech der Brücke 34 heraus gebogen ist, kann zusätzlich oder alternativ eine Vertiefung vorgesehen werden.

Auf der Unterseite der Brücke 34 ist ein zweites, als Zapfen ausgebildetes Identmittel 102 angeordnet. Das zweite Identmittel 102 ist auf der Unterseite der Brücke 38 angeordnet und erstreckt sich im Wesentlichen parallel zu der Begrenzung 36. Das zweite Identmittel 102 korrespondiert mit einem als Öffnung ausgebildeten ersten Identmittel 101, welches in Fig. 3 ersichtlich ist. Das erste Identmittel 101 ist derart angeordnet und ausgeformt, dass es das zweite Identmittel 102 in dem in Fig. 1 gezeigten montierten Zustand in Betriebsstellung vollständig aufnehmen kann. Bei einem weiteren, nicht gezeigten Wischarm, ist das erste Identmittel beispielsweise an einer anderen Position der Aufnahme 38 angeordnet und/oder unterschiedlich ausgeformt, so dass das zweite Identmittel 102 des Wischerarms 14 nicht mit diesem korrespondiert, d.h. nicht in dieses eingeführt werden kann, wodurch eine Verwechslung der Wischblätter vermieden wird.

In Fig. 3 ist das erste Anschlussteil 16 der Anschlussvorrichtung 10 mit dem Wischblatt 12 in perspektivischer Darstellung gezeigt. Das Wischblatt 12 umfasst einen Spoiler 24, der an der Federschiene 22 befestigt ist. Ebenso wie der Spoiler 24 ist auch das erste Anschlussteil 16 an der Federschiene 22 befestigt. In einer Variation kann das erste Anschlussteil 16 auch am Spoiler 24 befestigt sein. Das erste Anschlussteil 16 weist eine Öffnung als Gelenkgegenelement 42 auf, die zur Aufnahme des Bolzens 26 dient, so dass zusammen mit dem Bolzen 26 das Gelenk 44 (siehe Fig. 1) gebildet ist. Das Gelenkgegenelement 42 kann beispielsweise als durchgehendes Loch oder als Sackloch ausgeführt sein.

Von der Gelenkachse des Gelenks 44 beabstandet ist die Aufnahme 38 für die Brücke 34. Die Auf nahme 38 umfasst hierbei einen Boden 60 sowie eine erste Seitenwand 62 und eine zweite Seitenwand 64, die auf der dem Gelenk 44 zugewandten Seite der Aufnahme 38 angeordnet ist. Der Boden 60 der Aufnahme 38 weist im Bereich der zweiten Seitenwand 64 eine longitudinale Ausformung 66 auf, die parallel zur Gelenkachse und damit parallel zum Gelenkgegenelement 42 verläuft. Hierbei reicht die longitudinale Ausformung 66, genau wie die Aufnahme 38, von der Tasche 40 bis zur äußeren Begrenzung des ersten Anschlussteils 16, so dass der Ansatz 56 des zweiten Anschlussteils 18 durch die longitudinale Ausformung 66 zu gleiten vermag. Die Tasche 40 folgt in ihrer inneren Kontur der Begrenzung 36 mit dem Ansatz 56 des zweiten Anschlussteils 18.

Die longitudinale Ausformung 66 ist hierbei zusammen mit dem Ansatz 56 des zweiten Anschlussteils 18 so dimensioniert, dass der Lösewinkel etwa 25° beträgt, d.h. dass durch eine Drehung des ersten Anschlussteils 16 bezüglich des zweiten Anschlussteils 18 um 25° die axiale Arretierung des Gelenks 44 aufgehoben wird, da die Begrenzung 36 sich im Querschnitt vollständig innerhalb der Aufnahme 38 mit der longitudinalen Ausformung 66 befindet. Damit kann durch eine axiale Verschiebung auf der Gelenkachse bzw. auf dem Bolzen 26 das erste Anschlussteil 16 vom zweiten Anschlussteil 18 gelöst werden.

Wie aus Fig. 3 ersichtlich ist, ist das als Öffnung ausgebildete Identmittel 101 in den Boden 60 der Aufnahme 38 mit seitlichem Abstand zu der Tasche 40 eingebracht.

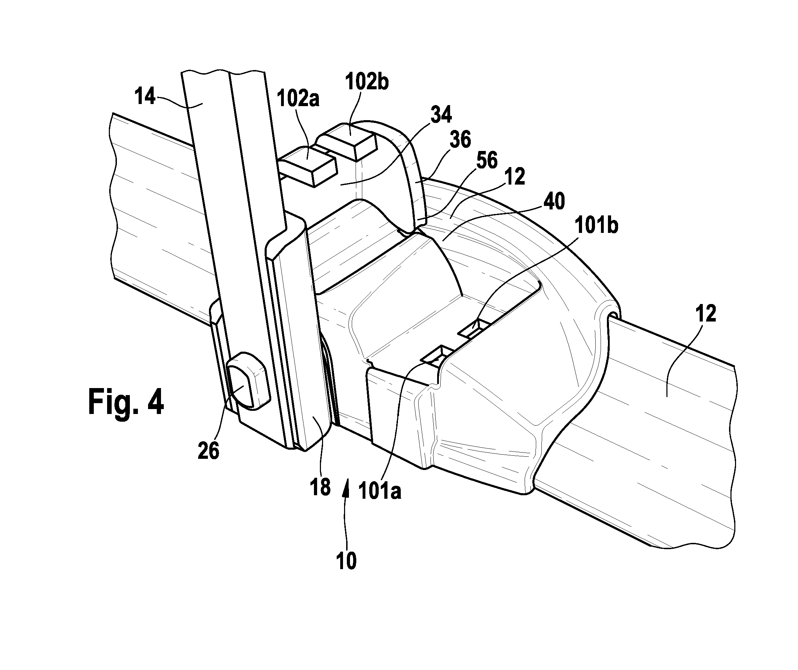

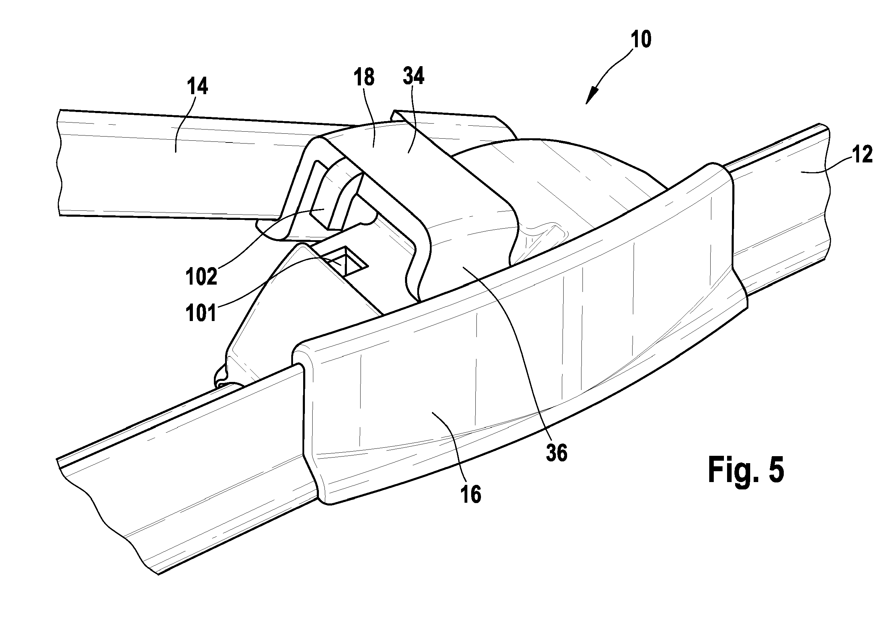

Vom Grundaufbau der Anschlussvorrichtung 10 sind die folgenden Ausführungsbeispiele zumindest nahezu identisch, so dass im Folgenden im Wesentlichen nur auf die Unterschiede eingegangen wird:
Bei dem in Fig. 4 dargestellten Ausführungsbeispiel sind die Identmittel 102a und 102b zweier unterschiedlicher Wischerarme gemeinsam an einem Wischerarm 14 bzw. an dem zugehörigen zweiten Anschlussteil 18 dargestellt, um die unterschiedliche Positionierung der zweiten Identmittel 102a und 102b an den zwei unterschiedlichen zweiten Anschlussteilen 18 zu verdeutlichen. Wie aus Fig. 5 ersichtlich ist, reicht es aus, an einem Wischarm 14 lediglich ein einziges zweites Identmittel 102 anzuordnen.

Zu den zweiten Identmitteln 102a und 102b existieren korrespondierende erste Identmittel 101 und 101b, wobei sich die beiden Identmittelpaare 101a + 102a sowie 101b + 102b normalerweise auf zwei unterschiedliche Wischblätter verteilen, so dass genau ein Wischblatt 12 einem Wischarm 14 zuordenbar ist. In Fig. 4 ist der Bolzen 26 bereits in das Gelenkgegenelement 42 des ersten Anschlussteils eingeführt. Der Wischerarm 14 weist einen Winkel von 90° zur Längserstreckung des Wischblatts 12 auf. Werden der Wischerarm 14 und das Wischblatt 12 relativ zueinander verdreht, greift die Begrenzung 36 mit dem Ansatz 56 in die Tasche 40 ein. Ferner taucht das als Zapfen ausgebildete zweite Identmittel 102a bzw. das zweite Identmittel 102b in das korrespondierende erste Identmittel 101 bzw. 101b ein. Durch den Eingriff der Begrenzung 36 in die Tasche 40 wird ein axiales Verschieben entlang der Drehachse des Bolzens 26 vermieden. Durch Variation der Länge des Ansatzes 56 der Begrenzung 36 kann der Lösewinkel variiert werden. In dem gezeigten Ausführungsbeispiel sind die zweiten Identmittel 102a und 102b randseitig an der Brücke 34 angeformt und erstrecken sich jeweils in einer Parallelebene zu einer die Begrenzung 36 aufnehmenden Ebene.

In Fig. 5 sind der Wischerarm 14 und das Wischblatt 12 bereits relativ zueinander verschwenkt worden. Erstes Identmittel 101 und zweites Identmittel 102 stehen kurz vor dem Eingriff. Die Begrenzung 36 taucht bereits ein Stück weit in die Tasche 40 ein. Anstelle der Anordnung des als Zapfen ausgebildeten zweiten Identmittels 102 seitlich von der Brücke 34 ist auch eine Anordnung unmittelbar unterhalb der Brücke 34 denkbar.

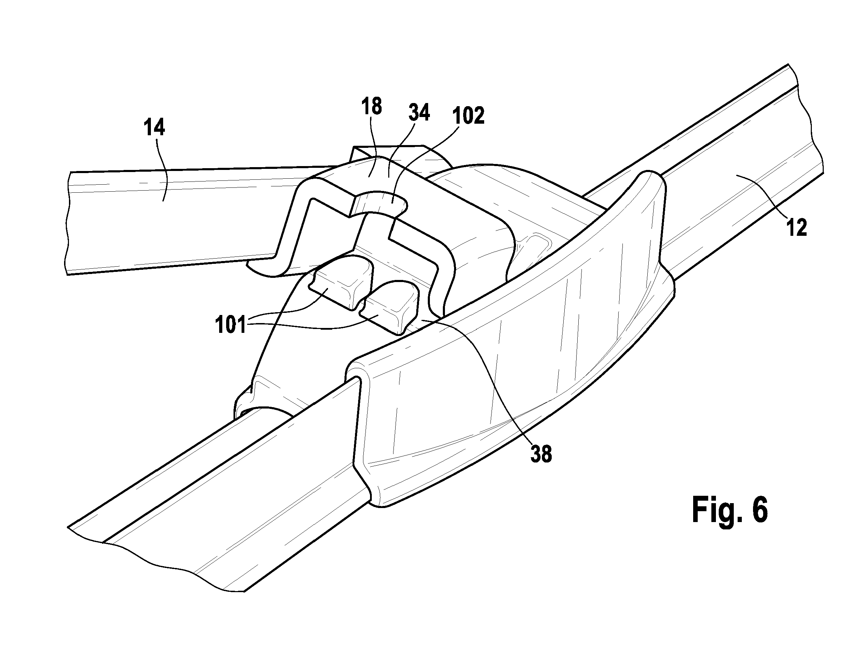

Bei dem in Fig. 6 dargestellten Ausführungsbeispiel ist die Anordnung von Zapfen und Öffnung gegenüber dem Ausführungsbeispiel gemäß Fig. 5 vertauscht. Die ersten Identmittel 101 sind als nebeneinander angeordnete Zapfen ausgebildet. Diese sind im Bereich der Aufnahme 38 angeordnet. In der Brücke 34 des zweiten Anschlussteils 18 ist eine mit dem in der Zeichnungsebene linken ersten Identmittel 101 korrespondierende, randseitge Ausnehmung eingebracht, die das zweite Identmittel 102 bildet. Der in Fig. 6 gezeigte Wischerarm 14 passt nicht zu dem gezeigten Wischblatt 12, da kein weiteres zweites Identmittel zur Aufnahme des in der Zeichnungsebene rechten ersten Identmittels 101 vorgesehen ist. Der Wischarm 14 lässt sich nicht in seine endgültige Betriebsposition verschwenken. Das zu dem dargestellten Wischblatt 12 korrespondierende, nicht gezeigte zweite Anschlussteil 18 weist zwei nebeneinander angeordnete, als Ausnehmungen ausgebildete erste Identmittel 101 auf. Auf diese Weise kann eine Verwechslung der Zuordnung der Wischblätter 12 zwischen Fahrerseite und Beifahrerseite vermieden werden.

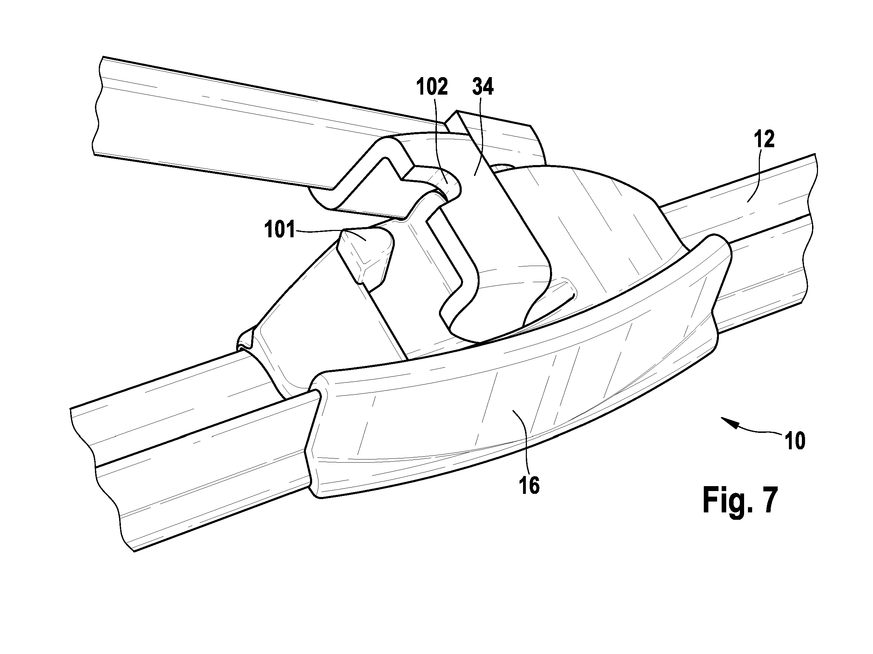

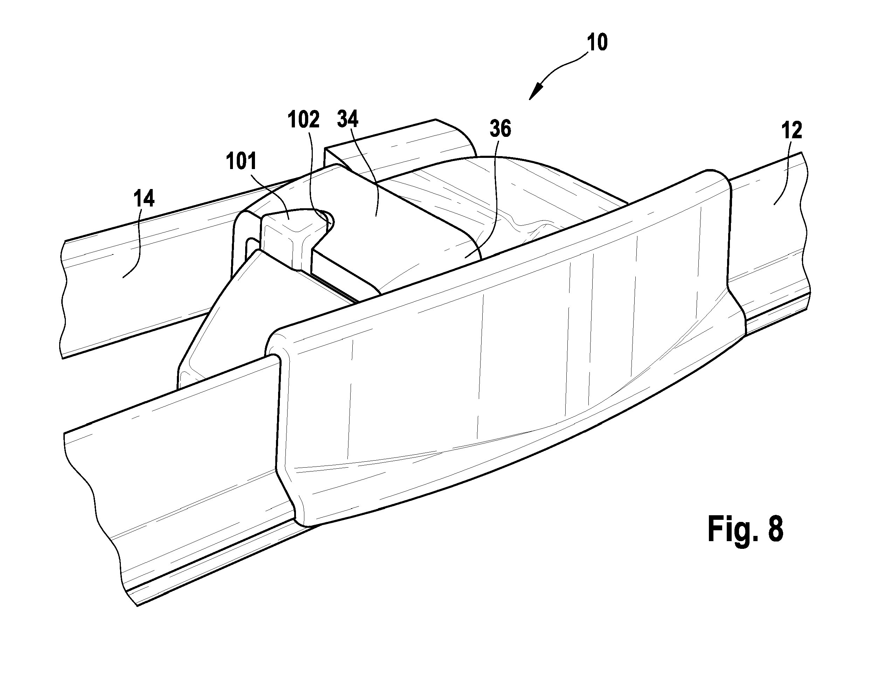

Bei dem in Fig. 7 dargestellten Ausführungsbeispiel ist ein als Zapfen ausgebildetes erstes Identmittel 101 am ersten Anschlussteil 16 des Wischblattes 12 vorgesehen. Dieses korrespondiert mit einem als randseitige Ausnehmung in der Brücke 34 ausgebildeten zweiten Identmittel 102. In Fig. 8 ist die Anschlussvorrichtung 10 im montierten Zustand gezeigt. Dabei ist die Begrenzung 36 in der Tasche 40 vollständig aufgenommen und das erste Identmittel 101 greift vollständig in das als seitliche Ausnehmung in der Brücke 34 ausgebildete zweite Identmittel 102 ein. Der Wischerarm 14 verläuft im montierten Zustand parallel zu dem Wischblatt 12.

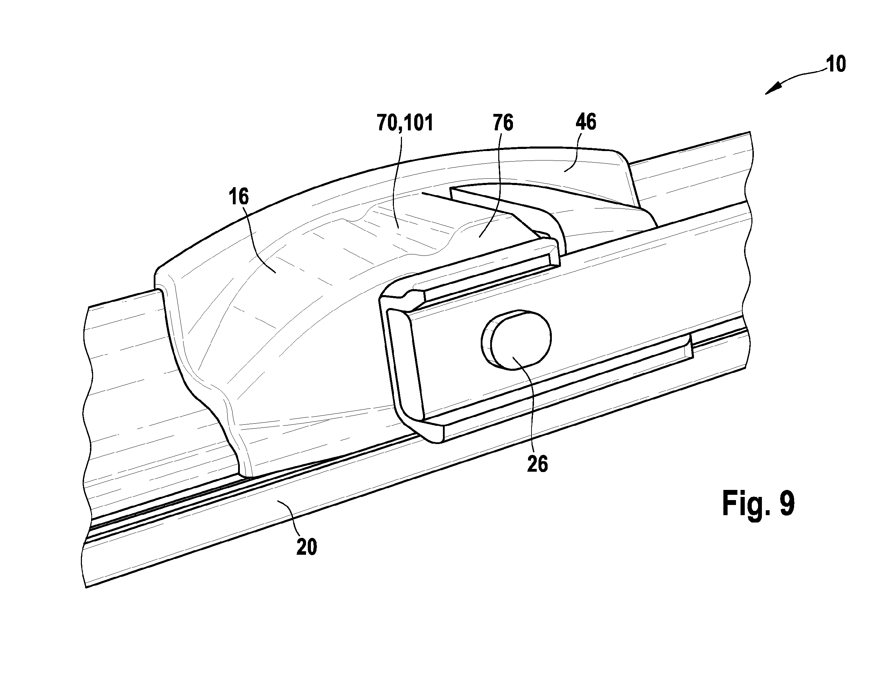

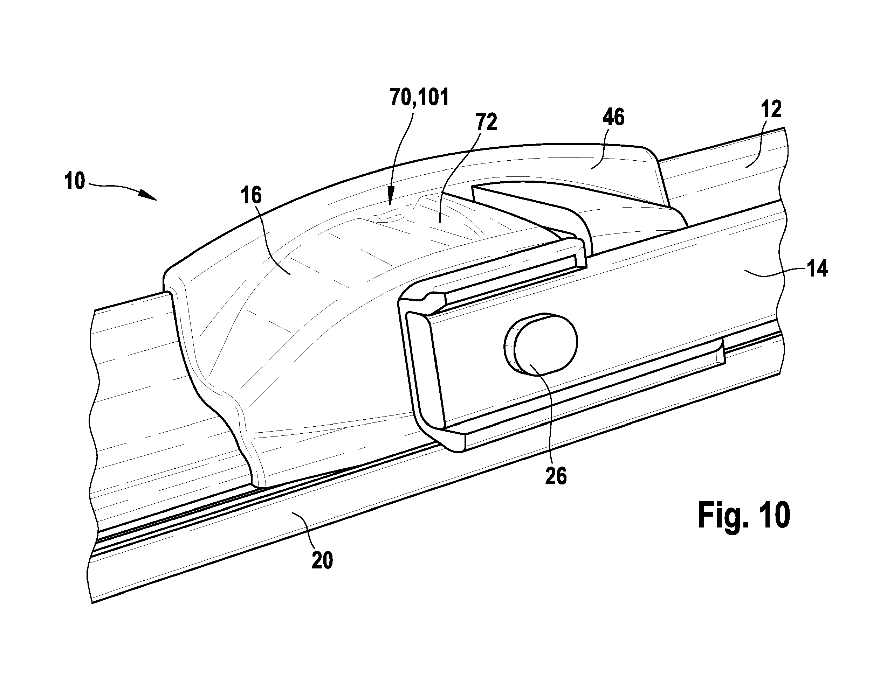

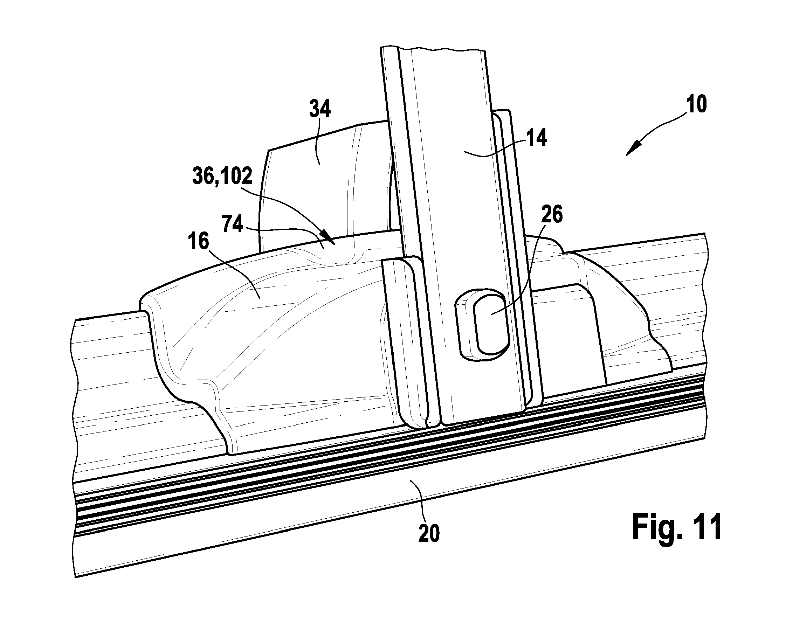

Bei den in den Fig. 9 bis 11 dargestellten Ausführungsbeispiel dient die Begrenzung 36 bzw. deren Ausformung als zweites Identmittel 102. Als korrespondierendes erstes Identmittel 101 dient die dem Wischgummi 20 abgewandte Oberseite 70 des ersten Anschlussteils 16. In Fig. 10 ist in diese eine sich parallel zur Drehachse des Bolzens 26 erstreckende Vertiefung 72 eingebracht. Durch diese Vertiefung wird ein in Richtung Bolzen 26 weisender Abschnitt 74 der Begrenzung 36 in Richtung einer Spoilerwand 46 des ersten Anschlussteils 16 verschoben bis in die in Fig. 11 gezeigte Position, woraufhin das Wischblatt 12 in die in Fig. 10 gezeigte Position mit parallel zu dem Wischblatt 12 angeordneten Wischerarm 14 verschwenkt wird. Das in Fig. 9 gezeigte erste Anschlussteil 16 der Anschlussvorrichtung 10 weist keine solche Vertiefung auf, so dass der in Richtung Bolzen weisende Absatz 74 der Begrenzung 36 beim Versuch des Zusammenführens der beiden Anschlussteile 16, 17 an der Seitenfläche 76 der Oberseite 70 des ersten Anschlussteils 16 anstoßen würde. Somit korrespondieren nur die in den Fig. 10 und 11 gezeigten Identmittel 101 und 102 und nicht die in den Fig. 9 und 11 gezeigten Identmittel 101 und 102 miteinander.

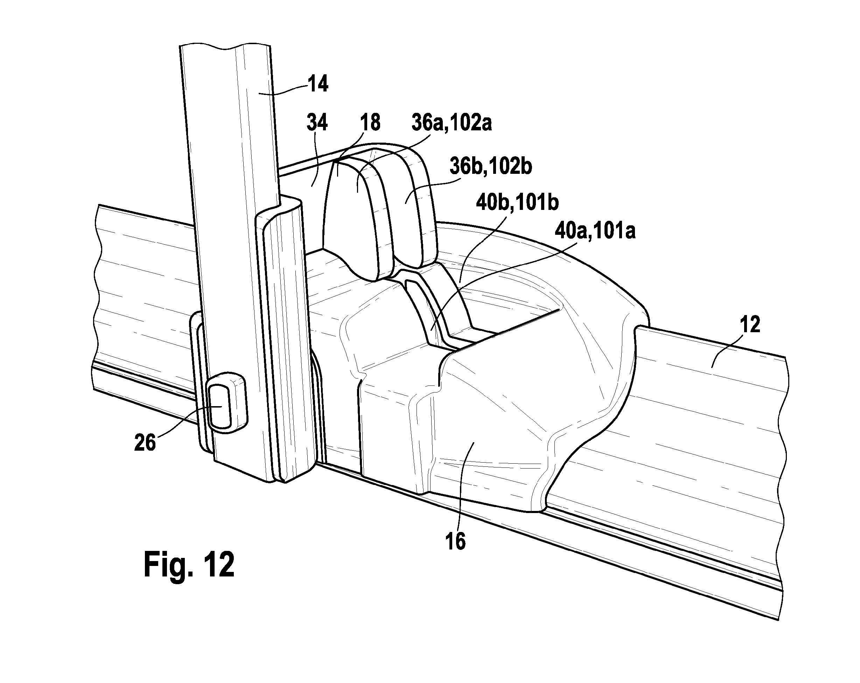

Bei dem in Fig. 12 dargestellten Ausführungsbeispiel dient die an die Brücke 34 angeformte Begrenzung 36 als zweites Identmittel. Zur Verdeutlichung der unterschiedlichen Position der zweiten Identmittel bei zwei unterschiedlichen Wischarmen sind in Fig. 12 zwei zweite Identmittel 102a und 102b eingezeichnet. Es reicht aus, an zwei unterschiedlichen Wischarmen 14 bzw. den zweiten Anschlussteilen 18 nur jeweils eine zweite Begrenzung, d.h. ein zweites Identmittel 102 vorzusehen, wobei die Begrenzungen an den unterschiedlichen zweiten Anschlussteilen 18 entweder unterschiedlich positioniert und/oder unterschiedlich ausgeformt sind. Die zweiten Identmittel 102a und 102b korrespondieren mit ersten Identmitteln 101a, 101b, die in diesem Ausführungsbeispiel als Taschen 40a, 40b zur Aufnahme der Begrenzungen 36a, 36b ausgebildet sind.

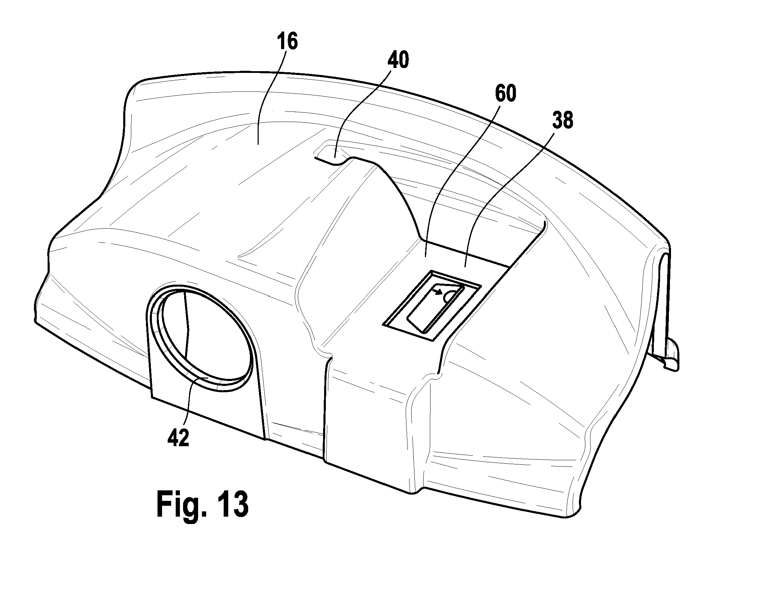

In Fig. 13 ist ein erstes Anschlussteil 16 mit einer Aufnahme 38 gezeigt. Seitlich ist das als Öffnung ausgebildete Gegengelenkelement 42 zu erkennen. In den Boden 60 der Aufnahme 38 ist ein Identlogo eingeprägt, welches in diesem Fall die Fahrerseite symbolisiert. Hierdurch weiß der Anwender, dass ein mit diesem ersten Anschlussteil ausgerüstetes Wischblatt 12 nur an dem fahrerseitigen Wischarm zu montieren ist.

## Patentansprüche

1. Anschlussvorrichtung für einen Wischerarm (14) und ein Wischblatt (12) mit einem wischblattseitigen ersten Anschlussteil (16) und einem wischarmseitigen zweiten Anschlussteil (18) die in Betriebsstellung nebeneinander angeordnet und über ein Gelenkelement um eine Gelenkachse schwenkbar verbunden sind und zumindest teilweise durch ein Sicherungsmittel (32) ineinander greifen und wobei das erste Anschlussteil (16) eine Aufnahme (38) zur Aufnahme des Sicherungsmittels (32) aufweist, **dadurch gekennzeichnet, dass** das erste Anschlussteil (16), insbesondere die Aufnahme (38), ein erstes Identmittel (101) und das zweite Anschlussteil (18), insbesondere das Sicherungsmittel (32), ein mit dem ersten Identmittel (101) korrespondierendes zweites Identmittel (102) aufweist, wobei das erste Identmittel (101) formkomplementär zu dem zweiten Identmittel (102) ausgebildet ist, wobei die Identmittel (101, 102) eine Zuordnung des Wischblattes (12) zu einem Wischarm (14) der Fahrerseite oder der Beifahrerseite festlegen, um eine Montage eines Wischblattes an einem nicht zugehörigen Wischarm zu verhindern.

2. Anschlussvorrichtung nach Anspruch 1, **dadurch gekennzeichnet, dass** das Sicherungsmittel (32) eine Brücke (34) mit einer Begrenzung (36) umfasst, und dass das Sicherungsmittel (32) das erste Anschlussteil (16) mittels der Brücke (34) zumindest teilweise übergreift, und dass die Begrenzung (36) derart angeordnet ist, dass in Betriebsstellung das erste Anschlussteil (16) und das zweite Anschlussteil (18) gegenüber einem axialen Verschieben auf der Gelenkachse arretiert sind.

3. Anschlussvorrichtung nach Anspruch 2, **dadurch gekennzeichnet, dass** das erste Anschlussteil (16) vom zweiten Anschlussteil (18) durch mindestens eine Drehung zumindest eines der Anschlussteile (16, 18) um die Gelenkachse um mindestens einen Lösewinkel von vorzugsweise zwischen 15 und 50 Grad, insbesondere zwischen 20 und 40 Grad, bevorzugt zwischen 20 und 30 Grad, idealerweise etwa 25 Grad, lösbar und/oder verbindbar ist.

4. Anschlussvorrichtung nach einem der vorhergehenden Ansprüche, **dadurch gekennzeichnet, dass** eines der beiden Identmittel (101, 102), vorzugsweise das erste Identmittel (101), als Öffnung und das andere Identmittel (102, 101), insbesondere das zweite Identmittel (102), als Zapfen ausgebildet ist, die in Betriebsstellung ineinander greifen.

5. Anschlussvorrichtung nach einem der vorhergehenden Ansprüche, **dadurch gekennzeichnet, dass** die Identmittel (101, 102) entlang einer Längserstreckung des Sicherungsmittels (32) azentrisch angeordnet sind.

6. Anschlussvorrichtung nach einem der vorhergehenden Ansprüche, **dadurch gekennzeichnet, dass** die Begrenzung (36) als zweites Identmittel (102) und eine Tasche (40) zur Aufnahme der Begrenzung (36) und/oder die Oberseite (70) des ersten Anschlussteils (16) als erstes Identmittel (101) ausgebildet ist.

7. System umfassend zwei Flachbalkenwischblätter mit jeweils einem ersten Anschlussteil (16) zum Befestigen jeweils eines Flachbalkenwischblattes (12) an jeweils einem Wischarm (14), wobei die ersten Anschlussteile (16) jeweils ein Gelenkgegenelement (42) umfassen, so dass die Flachbalkenwischblätter (12) um jeweils eine Gelenkachse mit dem jeweiligen Wischarm (14) schwenkbar verbindbar sind, und wobei die ersten Anschlussteile (16) jeweils eine Auf nahme (38) zur Aufnahme jeweils eines Sicherungsmittels (32) eines zweiten Anschlussteils (18) des zugehörigen Wischarms (14) aufweisen, **dadurch gekennzeichnet, dass** an mindestens einem der Flachbalkenwischblätter (12) an der Aufnahme (38) mindestens ein erstes Identmittel (101) zum Unterscheiden der beiden Wischblätter (12) vorgesehen ist, welches mit einem am zweiten Anschlussteil (18) angeordneten, zu dem ersten Identmittel (101) formkomplementären zweiten Identmittel (102) korrespondiert, wobei das erste Identmittel (101) in der Weise ausgebildet ist, dass eine Zuordnung des Flachbalkenwischblatts (12) zu einem Wischarm (14) der Fahrerseite oder der Beifahrerseite festlegt, um eine Montage eines Flachbalkenwischblattes (12) an einem nicht zugehörigen Wischarm (14) zu verhindern.

8. System nach Anspruch 7, **dadurch gekennzeichnet, dass** das erste Identmittel (101) als Zapfen oder Öffnung ausgebildet ist.

9. System nach einem der Ansprüche 7 oder 8, **dadurch gekennzeichnet, dass** das an jedem Flachbalkenwischblatt als erste Identmittel (101) ein Zapfen und/oder eine Öffnung angeordnet ist, und dass die Zapfen und/oder die Öffnungen unterschiedlich ausgeformt und/oder positioniert und/oder in unterschiedlicher Anzahl vorhanden sind.

10. System nach einem der Ansprüche 7 bis 9, **dadurch gekennzeichnet, dass** die ersten Identmittel (101) als Taschen (40) zur Aufnahme jeweils mindestens einer Begrenzung (36) der Sicherungsmittel (32) ausgebildet sind, wobei die Taschen (40) der beiden Flachbalkenwischblätter (12) unterschiedlich ausgeformt und/oder positioniert sind.

## Claims

1. Connection device for a wiper arm (14) and a wiper blade (12) comprising a first connection part (16) on the wiper blade side and a second connection part (18) on the wiper arm side, which are arranged adjacent to one another in the operating position and are pivotably connected via a hinge element about a hinge axis, and at least partially engage in one another by a securing means (32) and the first connection part (16) having a receiver (38) for receiving the securing means (32), **characterized in that** the first connection part (16), in particular the receiver (38), has a first identification means (101) and the second connection part (18), in particular the securing means (32), has a second identification means (102) corresponding to the first identification means (101), wherein the first identification means (101) is of complementary shape to the second identification means (102), wherein the identification means (101, 102) fix an assignment of the wiper blade (12) to a wiper arm (14) of the driver's side or the front passenger's side, in order to prevent mounting of a wiper blade on a wiper arm which does not belong to it.

2. Connection device according to Claim 1, **characterized in that** the securing means (32) comprises a bridge (34) with a limit stop (36) and **in that** the securing means (32) overlaps at least partially the first connection part (16) by means of the bridge (34), and **in that** the limit stop (36) is arranged such that in the operating position the first connection part (16) and the second connection part (18) are blocked relative to an axial displacement on the hinge axis.

3. Connection device according to Claim 2, **characterized in that** the first connection part (16) is releasable from and/or able to be connected to the second connection part (18) by at least one rotation of at least one of the connection parts (16, 18) about the hinge axis by at least one releasing angle of preferably between 15 and 50 degrees, in particular between 20 and 40 degrees, preferably between 20 and 30 degrees, ideally approximately 25 degrees.

4. Connection device according to one of the preceding claims, **characterized in that** one of the two identification means (101, 102), preferably the first identification means (101), is configured as an opening and the other identification means (102, 101), in particular the second identification means (102), is configured as a pin which engage in one another in the operating position.

5. Connection device according to one of the preceding claims, **characterized in that** the identification means (101, 102) are arranged eccentrically along a longitudinal extension of the securing means (32).

6. Connection device according to one of the preceding claims, **characterized in that** the limit stop (36) is configured as a second identification means (102) and a recess (40) for receiving the limit stop (36) and/or the upper face (70) of the first connection part (16) as a first identification means (101).

7. System comprising two flat-bar wiper blades comprising respectively one first connection part (16) for fastening respectively one flat-bar wiper blade (12) to respectively one wiper arm (14), the first connection parts (16) respectively comprising a counter hinge element (42), so that the flat-bar wiper blades (12) may be pivotably connected about respectively one hinge axis to the respective wiper arm (14), and the first connection parts (16) comprising respectively one receiver (38) for receiving respectively a securing means (32) of a second connection part (18) of the corresponding wiper arm (14), **characterized in that** on at least one of the flat-bar wiper blades (12) on the receiver (38) at least one first identification means (101) is provided for differentiating the two wiper blades (12), which first identification means (101) corresponds to a second identification means (102) which is arranged on the second connection part (18) and is of complementary shape to the first identification means (101), wherein the first identification means (101) is configured in such a way that it fixes an assignment of the flat-bar wiper blade (12) to a wiper arm (14) of the driver's side or the front passenger's side, in order to prevent mounting of a flat-bar wiper blade (12) on a wiper arm (14) which does not belong to it.

8. System according to Claim 7, **characterized in that** the first identification means (101) is configured as a pin or opening.

9. System according to one of Claims 7 or 8, **characterized in that** a pin and/or an opening is arranged on each flat wiper blade as first identification means (101), and **in that** the pins and/or the openings are differently formed and/or positioned and/or are present in different numbers.

10. system according to one of Claims 7 to 9, **characterized in that** the first identification means (101) are configured as recesses (40) for receiving respectively at least one limit stop (36) of the securing means (32), the recesses (40) of the two flat-bar wiper blades (12) being differently formed and/or positioned.

## Revendications

1. Dispositif de raccordement pour un bras d'essuie-glace (14) et un balai d'essuie-glace (12), comprenant une première partie de raccordement (16) du côté du balai d'essuie-glace et une deuxième partie de raccordement (18) du côté du bras d'essuie-glace, lesquelles sont juxtaposées dans la position de fonctionnement et sont reliées de manière pivotante autour d'un axe d'articulation par le biais d'un élément d'articulation et viennent en prise l'une dans l'autre au moins partiellement par un moyen de fixation (32), et la première partie de raccordement (16) comprenant un logement (38) pour la réception du moyen de fixation (32), **caractérisé en ce que** la première partie de raccordement (16), en particulier le logement (38), comprend un premier moyen d'identification (101) et la deuxième partie de raccordement (18), en particulier le moyen de fixation (32), comprend un deuxième moyen d'identification (102) correspondant au premier moyen d'identification (101), le premier moyen d'identification (101) étant réalisé de manière à présenter une forme complémentaire à celle du deuxième moyen d'identification (102), les moyens d'identification (101, 102) définissant une association du balai d'essuie-glace (12) à un bras d'essuie-glace (14) du côté du conducteur ou du côté du passager, afin d'empêcher un montage d'un balai d'essuie-glace sur un bras d'essuie-glace non associé.

2. Dispositif de raccordement selon la revendication 1, **caractérisé en ce que** le moyen de fixation (32) comporte un pont (34) présentant une limitation (36), et **en ce que** le moyen de fixation (32) recouvre au moins partiellement la première partie de raccordement (16) au moyen du pont (34), et **en ce que** la limitation (36) est disposée de telle sorte que, dans la position de fonctionnement, la première partie de raccordement (16) et la deuxième partie de raccordement (18) soient bloquées par rapport à un déplacement axial sur l'axe d'articulation.

3. Dispositif de raccordement selon la revendication 2, **caractérisé en ce que** la première partie de raccordement (16) peut être détachée de et/ou peut être reliée à la deuxième partie de raccordement (18) par au moins une rotation d'au moins l'une des parties de raccordement (16, 18) autour de l'axe d'articulation d'au moins un angle de détachement d'entre 15 et 50 degrés de préférence, en particulier d'entre 20 et 40 degrés, de préférence d'entre 20 et 30 degrés, idéalement d'approximativement 25 degrés.

4. Dispositif de raccordement selon l'une quelconque des revendications précédentes, **caractérisé en ce que** l'un des deux moyens d'identification (101, 102), de préférence le premier moyen d'identification (101), est réalisé en tant qu'ouverture et l'autre moyen d'identification (102, 101), en particulier le deuxième moyen d'identification (102), est réalisé en tant que goupille, lesquels viennent en prise l'un dans l'autre dans la position de fonctionnement.

5. Dispositif de raccordement selon l'une quelconque des revendications précédentes, **caractérisé en ce que** les moyens d'identification (101, 102) sont disposés de manière excentrée le long d'une étendue longitudinale du moyen de fixation (32).

6. Dispositif de raccordement selon l'une quelconque des revendications précédentes, **caractérisé en ce que** la limitation (36) est réalisée en tant que deuxième moyen d'identification (102), et une cavité (40) de réception de la limitation (36) et/ou le côté supérieur (70) de la première partie de raccordement (16) sont réalisés en tant que premier moyen d'identification (101).

7. Système comportant deux balais d'essuie-glace à barre plate pourvus respectivement d'une première partie de raccordement (16) pour la fixation d'un balai d'essuie-glace à barre plate (12) respectif à un bras d'essuie-glace (14) respectif, les premières parties de raccordement (16) comportant respectivement un élément conjugué d'articulation (42), de telle sorte que les balais d'essuie-glace à barre plate (12) puissent être reliés de manière pivotante autour d'un axe d'articulation respectif au bras d'essuie-glace (14) respectif, et les premières parties de raccordement (16) comprenant respectivement un logement (38) pour la réception d'un moyen de fixation (32) respectif d'une deuxième partie de raccordement (18) du bras d'essuie-glace associé (14), **caractérisé en ce que** sur au moins l'un des balais d'essuie-glace à barre plate (12), au niveau du logement (38), au moins un premier moyen d'identification (101) est prévu pour différencier les deux balais d'essuie-glace (12), lequel premier moyen d'identification correspond à un deuxième moyen d'identification (102) disposé sur la deuxième partie de raccordement (18) et dont la forme est complémentaire à celle du premier moyen d'identification (101), le premier moyen d'identification (101) étant réalisé de telle sorte qu'une association du balai d'essuie-glace à barre plate (12) à un bras d'essuie-glace (14) du côté du conducteur ou du côté du passager soit définie, afin d'empêcher un montage d'un balai d'essuie-glace à barre plate (12) sur un bras d'essuie-glace (14) non associé.

8. Système selon la revendication 7, **caractérisé en ce que** le premier moyen d'identification (101) est réalisé en tant que goupille ou ouverture.

9. Système selon l'une quelconque des revendications 7 ou 8, **caractérisé en ce que**, sur chaque balai d'essuie-glace à barre plate, une goupille et/ou une ouverture sont disposées en tant que premiers moyens d'identification (101), et **en ce que** les goupilles et/ou les ouvertures sont formées différemment et/ou positionnées différemment et/ou prévues en des nombres différents.

10. Système selon l'une quelconque des revendications 7 à 9, **caractérisé en ce que** les premiers moyens d'identification (101) sont réalisés en tant que cavités (40) de réception d'au moins une limitation (36) respective des moyens de fixation (32), les cavités (40) des deux balais d'essuie-glace à barre plate (12) étant formées et/ou positionnées différemment.
